# EUROPÄISCHE PATENTSCHRIFT

(11) **EP 0 757 738 B1**
(45) Veröffentlichungstag und Bekanntmachung des Hinweises auf die Patenterteilung: **28.10.1998**
(21) Anmeldenummer: 95918585.1
(22) Anmeldetag: 21.04.1995
(51) Int. Cl.: E03B 1/04

(54) **VORRICHTUNG UND VERFAHREN ZUR NUTZUNG VON GRAUWASSER**
DEVICE AND PROCESS FOR REUSING WASTE WASH WATER
PROCEDE ET DISPOSITIF PERMETTANT D'UTILISER LES EAUX USEES DE LAVAGE

(30) Priorität: 23.04.1994 DE 4414207; 23.06.1994 DE 4421668
(43) Veröffentlichungstag der Anmeldung: 12.02.1997
(60) Teilanmeldung: 98105483.6
(73) Patentinhaber: Hans Grohe GmbH & Co. KG, 77761 Schiltach (DE)
(72) Erfinder: HAUSER, Dieter, 78554 Aldingen (DE); HEINZELMANN, Werner, 72275 Alpirsbach (DE)
(74) Vertreter: Patentanwälte Ruff, Beier, Schöndorf und Mütschele
(86) Internationale Anmeldenummer: EP9501515
(87) Internationale Veröffentlichungsnummer: WO9529299

(56) Entgegenhaltungen:
- DE-A- 4 328 014
- DE-U- 9 316 877
- DE-U- 9 402 156
- US-A- 4 115 879
- US-A- 5 106 493
- US-A- 5 147 532

## Beschreibung

Die Erfindung betrifft die Verwendung von Grauwasser im Haushalt.

Es ist bekannt, daß für bestimmte Zwecke im Haushalt, beispielsweise die Toilettenspülung, kein Trinkwasser erforderlich ist, sondern daß man hierfür leicht verschmutztes Abwasser aus dem Haushalt verwenden kann, das als Grauwasser bezeichnet wird. Solches Grauwasser stammt beispielsweise aus dem Abfluß von Waschbecken, Badewannen, Duschbecken, Waschmaschinen o. dgl. Gegebenenfalls kann auch Regenwasser verwendet werden. Das Grauwasser wird dann in einem Behälter gesammelt, bis es zur Benutzung aus dem Behälter entnommen wird.

Selbst bei gefiltertem Grauwasser besteht jedoch die Gefahr, daß bei längeren Standzeiten eine Geruchsentwicklung auftritt.

Es ist bereits eine Einrichtung für die Substitution von Trinkwasser bei der Toilettenspülung bekannt (DE-C2-3712421), die zur Vermeidung der Geruchsentwicklung den Behälter über eine Zeitschaltuhr gesteuert mit Hilfe eines Kompressors belüftet. Weiter ist es bereits bekannt (DE-OS 41 34 272), das in einem Tank gesammelte Grauwasser automatisch mit einem Desinfizierungsmittel zu versehen.

Ebenfalls bekannt ist es, das von Hand zu betätigende Ventil am Toilettenbecken so auszugestalten, daß nach Spülung mit Brauchwasser anschließend eine geringe Menge Frischwasser, d. h. Leitungswasser, nachfließt.

Es ist bereits eine Vorrichtung und ein Verfahren zur Wiederverwendung von Grauwasser bekannt. Die bekannte Anlage benötigt zunächst einen Sumpf, in dem das Grauwasser gesammelt wird. Von dem Sumpf aus wird es mit Hilfe einer ersten Pumpe durch ein Filter und von dort in einen Speichertank gepumpt. Zur Entnahme des Brauchwassers aus dem Speichertank ist eine Pumpe vorgesehen, die das Brauchwasser beispielsweise zur Toilettenspülung pumpt.

Bei einem weiteren bekannten Wasserreinigungssystem (US-A-5 147 532) ist ebenfalls ein erster Tank vorgesehen, in den das Grauwasser gelangt und von dem aus es mit Hilfe einer Pumpe über ein Filter und Erhitzungsanlagen in einen zweiten Tank gepumpt werden kann. Von dort aus kann das Wasser zur Entnahme für das Waschen von Autos oder für das Beregnen von Rasen verwendet werden.

Bei einer weiteren bekannten Grauwasseranlage (DE-A1-43 28 014) ist ebenfalls ein Sammelbehälter vorhanden. Nähere Einzelheiten über die Leitungssysteme sind nicht angegeben.

Weiterhin bekannt ist ein zentrales Steuer- und Überwachungsgerät für Regenwassernutzungsanlagen, das die Betriebszustände der angeschlossenen Anlage überwacht sowie die Wasserstände kontrolliert und anzeigt.

Bei einem weiteren Wasserwiederverwendungssystem (US-A-4 115 879) wird die Pumpwirkung, die das gesammelte Brauchwasser zu den Entnahmestellen führt, durch einen Teil des gesammelten Wassers selbst erzeugt.

Der Erfindung liegt die Aufgabe zugrunde, eine praktikable Möglichkeit zur Nutzung von Grauwasser zu schaffen, die insbesondere mit geringem Aufwand auch bei Stillstandszeiten Geruchsentwicklungen vermeidet und dennoch auch nach längeren Stillstandszeiten immer sofort einsatzbereit ist. Außerdem soll automatisch eine Kontrolle derartiger Zusatzeinrichtungen ermöglicht werden, so daß die Anlage benutzerfreundlich arbeitet.

Zur Lösung dieser Aufgabe schlägt die Erfindung eine Vorrichtung mit den Merkmalen des Anspruchs 1 sowie ein Verfahren mit den Merkmalen des Anspruchs 33 vor. Weiterbildungen der Erfindung sind Gegenstand der jeweiligen Unteransprüche. Der Wortlaut sämtlicher Ansprüche wird durch Bezugnahme zum Inhalt der Beschreibung gemacht.

Zum einen geht die Erfindung bei bevorzugten Ausführungsformen von der Überlegung aus, daß das Grauwasser selbst dann, wenn es gefiltert ist, Verunreinigungen enthält, die nach einer bestimmten Zeit zu faulen beginnen, so daß ein Bakterienwachstum einsetzt. Nach der Erfindung erfolgt zu dem Zeitpunkt, den man als den kritischen ansehen muß, beispielsweise nach zwei Tagen, eine Entleerung des Sammelbehälters von dem Grauwasser. Diese Entleerung allein würde die Geruchsbelästigung schon beseitigen, jedoch würde hier der Nachteil entstehen, daß die Anlage anschließend nicht mehr sofort benutzbar ist, sondern erst wieder Grauwasser eingefüllt werden müßte. Kommt der Benutzer einer solchen Anlage beispielsweise aus dem Urlaub zurück, so müßte er zunächst Grauwasser produzieren, bevor seine Toilettenspülung wieder funktioniert. Daher wird von der Entleerungseinrichtung der Sammelbehälter nach der Entleerung gleich wieder mit Leitungswasser befüllt, damit dieser Zustand nicht eintreten kann.

Der Zeitablauf kann beispielsweise durch eine Zeitschaltuhr festgestellt werden, die nach Ablauf ein Auslaßventil öffnet.

Es sind ebenfalls andere Möglichkeiten zur Messung des Zeitablaufs vorhanden.

In Weiterbildung schlägt die Erfindung vor, daß die Vorrichtung eine Steuereinrichtung mit einem Zeitschaltglied enthält, das die Entleerungseinrichtung auslöst und das bei jeder nicht durch die Entleerungseinrichtung bewirkten Wasserentnahme aus dem Speicher zurückgesetzt wird.

Es kann erfindungsgemäß vorgesehen sein, daß die Entleerungseinrichtung derart ausgebildet ist, daß sie den Wasserspeicher nur zum Teil mit Leitungswasser befüllt. Der Sinn der Verwendung von Grauwasser liegt ja darin, den Verbrauch an Leitungswasser mit Trinkwasserqualität zu verringern. Für den genannten Zweck kann es je nach Größe des Speichers ausreichen, wenn der Speicher mit Leitungswasser für beispielsweise drei oder vier Toilettenspülungen befüllt wird.

Erfindungsgemäß kann vorgesehen sein, daß der Wasserspeicher einen Überlauf mit einem Geruchsverschluß aufweist. Das Grauwasser fällt unregelmäßig an, so daß die Verwendung eines Überlaufs dann erforderlich ist, wenn das Grauwasser grundsätzlich in den Speicherbehälter befördert wird.

In Weiterbildung der Erfindung kann vorgesehen sein, daß die Entleereinrichtung derart ausgebildet ist, daß sie anschließend an die Wiederbefüllung mit Leitungswasser nach kurzer Zeit eine erneute gegebenenfalls nicht vollständige Entleerung durchführt. Während die erste Entleerung nur Grauwasser befördert, kann durch die zweite Entleerung, die jetzt Leitungswasser befördert, ein Geruchsverschluß, der bei der vorhergehenden Entleerung noch mit Grauwasser gefüllt wurde, jetzt auch mit Leitungswasser gefüllt werden. Da der Geruchsverschluß nur geringe Mengen Wasser aufnimmt, kann die zweite Entleerung mit einer geringen Menge Wasser auskommen.

Erfindungsgemäß kann vorgesehen sein, daß die Entleerungseinrichtung eine Pumpe aufweist, wobei es sich hierbei gegebenenfalls um die das Grauwasser zur Toilette befördernde Pumpe handeln kann.

Ebenfalls möglich ist es, daß vom Brauchwasserauslaß aus dem Wasserspeicher eine mit einem Ventil versehene Entleerungsleitung direkt zum Fallrohr führt. Hier kann die Entleerung auch ohne Pumpe durch einfaches Öffnen des Ventils durchgeführt werden.

Insbesondere schlägt die Erfindung jedoch vor, eine Entleerungsleitung so anzuordnen, daß sie zu dem Überlauf des Wasserspeichers führt.

Erfindungsgemäß kann vorgesehen sein, daß die Zuleitung für Grauwasser und/oder Leitungswasser ein Magnetventil aufweist.

Ebenfalls vorgesehen sein kann, daß die Zuleitung für Grauwasser ein Filter aufweist.

In nochmals weiterer Ausgestaltung schlägt die Erfindung vor, daß die Entleerungseinrichtung derart ausgebildet ist, daß sie einen Entleerungsvorgang bzw. Spülvorgang eines nachgeschalteten Spülkastens auslöst. Dies gilt für den Fall, daß die Toilettenspülung einen Spülkasten mit stehendem Wasser aufweist. Da solche Spülkasten eine handbetätigte Entleerungseinrichtung aufweisen, braucht nur eine geringfügige Modifizierung vorgenommen zu werden, da man diese Einrichtung ausnutzen kann. Auch hier kann vorgesehen sein, daß zwei Spülvorgänge hintereinander, gegebenenfalls mit einem gewissen Abstand, durchgeführt werden, um auch den Siphon der Toilette mit Leitungswasser zu füllen.

Die Auslösung des Spülvorgangs des Spülkastens kann beispielsweise dadurch geschehen, daß an dem Betätigungsgriff ein Hubmagnet oder ein kleiner Elektroantrieb vorgesehen ist, der über eine elektrische Leitung oder ferngesteuert von der Entleerungseinrichtung oder deren Steuerung ausgelöst wird. Ebenfalls möglich ist es, einen Hydraulikzylinder für den Spülvorgang zu verwenden, der sein Druckwasser von der Pumpe der Entleerungseinrichtung erhält.

Anstelle einer leitungsgebundenen Fernsteuerung bzw. Auslösung schlägt die Erfindung ebenfalls vor, der Entleerungseinrichtung einen Sender und der Spüleinrichtung des Spülkastens einen Empfänger zuzuordnen, die funktionell miteinander verbunden sind. Beispielsweise könnte ein Ultraschallsignal durch die Wasserleitung selbst abgegeben werden, das den Spülvorgang auslöst. Denkbar ist es ebenfalls, daß bei Überschreiten eines bestimmten Drucks in der zum Spülkasten führenden Leitung der Spülvorgang ausgelöst wird.

Erfindungsgemäß kann vorgesehen sein, daß nach einer Befüllung des Wasserbehälters und gegebenenfalls des Spülkastens mit Leitungswasser sich die gesamte Steuerungsanlage abschaltet. Bei Leitungswasser sind die Entleerungsvorgänge nicht erforderlich.

Falls jedoch zur Befüllung des Wasserbehälters auch Regenwasser verwendet wird, das auch bei längerer Urlaubszeit nachgeliefert wird, könnte eine solche Anlage auch eine Wiederbefüllung mit frischem Regenwasser durchführen und dann die Entleerungs- und Neubefüllungsvorgänge auch regelmäßig wiederholen.

Zum anderen wird es bei weiteren bevorzugten Ausführungsformen der Erfindung möglich, sobald eines der Funktionsteile der Vorrichtung schlechter oder gar nicht mehr funktioniert, eine Warnung abzugeben. Bei einer sich langsam verschlechternden Funktion kann die Schwelle, bei der das Warnsignal abgegeben wird, so eingestellt werden, daß noch eine Wartung, eine Reparatur oder ein Austausch erfolgen kann, bevor die Funktion vollständig ausfällt.

Je nach Schweregrad der Funktionsstörung kann auch vorgesehen sein, daß die Anlage stillgelegt wird. Dies kann bei schwerwiegenden hygienischen Mängeln der Fall sein. Ebenfalls vorgesehen ist die Möglichkeit, daß die betroffene Funktion durch eine andere Funktion ersetzt wird.

Erfindungsgemäß kann vorgesehen sein, daß die Vorrichtung eine Entkeimungsanlage mit Hilfe von UV-Strahlung aufweist. Derartige Entkeimungsanlagen sind einer Desinfektion mit Hinzufügung von chemischen Mitteln vorzuziehen. Erfindungsgemäß kann nun die Steuereinrichtung der Vorrichtung derart ausgebildet sein, daß sie beispielsweise die Funktion der in der Entkeimungsanlage angeordneten UV-Lampe durch Messen ihres Stromverbrauchs überprüft. Ändert sich der Stromverbrauch gegenüber dem Nennwert, so kann dies einen Hinweis für eine schlechte Funktion der UV-Lampe darstellen. Bei einer schlechten Funktion der UV-Lampe besteht daher auch die Gefahr, daß die Entkeimung nicht mehr korrekt arbeitet. Im einfachsten Fall wird ein Warnsignal dann gegeben, wenn der Stromverbrauch plötzlich auf null zurückgeht, was ein Zeichen für den Ausfall der Lampe ist.

Eine weitere von der Erfindung vorgeschlagene Möglichkeit zur Überprüfung des Arbeitens der Entkeimungsanlage besteht darin, an einer definierten Stelle die Trübung des Brauchwassers festzustellen. Dies kann beispielsweise mit Hilfe einer Lichtquelle und einer Fotozelle oder einem anderen fotoempfindlichen Element geschehen. Am sinnvollsten ist es selbstverständlich, als Lichtquelle hier die sowieso schon vorhandene UV-Lampe zu verwenden. Bei der Überprüfung der Trübung des Brauchwassers können nun mehrere Möglichkeiten unterschieden werden. Tritt eine sich langsam steigernde Trübung auf, so kann dies ein Zeichen dafür sein, daß die Strahlungsquelle mit Ablagerungen bedeckt ist, so daß nur ein Teil der Strahlung in das Wasser gelangt. In diesem Fall würde die Steuereinrichtung eine Aufforderung abgeben, die Entkeimungsanlage zu warten bzw. zu säubern.

Tritt eine plötzliche Trübung des Brauchwassers auf, so kann dies ein Zeichen dafür sein, daß das zugeführte Grauwasser mechanisch verunreinigt ist, beispielsweise durch Sand oder Schlamm, der aus dem Regenwasser stammen kann. In diesem Fall stellt die plötzlich auftretende Trübung ein Indiz für ein nicht mehr arbeitendes Filter dar, das solche mechanischen Verunreinigungen eigentlich entfernen soll.

Die Steuerungseinrichtung kann erfindungsgemäß so ausgebildet sein, daß sie je nach Schwere des Störungsfalls eine Warnung abgibt, die den Betreiber der Vorrichtung zur Wartung auf fordert, oder daß sie bei einer schwereren Störung die Anlage abschaltet.

Es kann jedoch erfindungsgemäß in Weiterbildung auch vorgesehen sein, daß im Störungsfall der Wasserspeicher entleert und mit Leitungswasser nachgefüllt wird. Dann kann die Anlage wieder ihre normale Funktion aufnehmen, da dann zunächst ja frisches Leitungswasser aus dem Wasserspeicher nachgeliefert wird.

In diesem Fall kann es sinnvoll sein, daß während der Entleerung des Wasserspeichers und seiner anschließenden Nachbefüllung die Vorrichtung zunächst kein Wasser abgibt.

Es kann erfindungsgemäß jedoch auch vorgesehen sein, daß im Störungsfall die Brauchwasserleitung zwischen dem Wassertank und der Entnahmestelle zur Kanalisation entleert und direkt mit Leitungswasser befüllt wird. Dies bedeutet ein schnelleres Reagieren, da das Leitungswasser nicht erst über den Wasserspeicher nachgefüllt werden muß.

In nochmals weiterer Ausgestaltung der Erfindung kann vorgesehen sein, daß im Störungsfall das Leitungswasser unmittelbar an der Entnahmestelle eingespeist wird. Dies bedeutet eine sehr schnelle Reaktion auf den Störungsfall, andererseits aber auch einen erhöhten Mehraufwand an Installation.

Der Wassertank, der ein relativ großes Volumen aufweisen soll, kann je nach den vorhandenen Gegebenheiten aufgestellt werden. Um seine Entleerung in die Kanalisation zu erleichtern, kann er beispielsweise im Keller eines Hauses angeordnet werden. In diesem Fall benötigt die Vorrichtung eine Fördereinrichtung, die das Brauchwasser aus dem Tank zu den Entnahmestellen fördert. Ebenfalls denkbar wäre es natürlich, den Wasserspeicher unter dem Dach anzuordnen, wobei dann die Fördereinrichtung das Grauwasser von den Waschbecken o. dgl. zu dem Tank befördern müßte, von wo aus es dann durch Schwerkraft selbst zu den Entnahmestellen gelangen könnte.

Die Erfindung schlägt nun vor, daß die Fördereinrichtung eine Pumpe und einen Druckkessel als Druckspeicher aufweisen kann und die Steuereinrichtung dann den Druck und/oder das Arbeiten der Pumpe überwacht. Auch hier kann eine Verbesserung der Benutzerfreundlichkeit der Vorrichtung erreicht werden, da das Arbeiten der Pumpe und das Arbeiten des Druckspeichers für die Vorrichtung wichtig sind.

Das korrekte Arbeiten der Fördereinrichtung, sowohl der Pumpe als auch des Druckkessels, sind insbesondere dann von Wichtigkeit, wenn vorhandene Filter regelmäßig rückgespült werden sollen. Reicht die Förderleistung der Pumpe und/oder der Druck im Druckkessel nicht aus, so kann der Fall auftreten, daß die Rückspülfunktion des Filters nicht mehr zu einem korrekten Ergebnis führt.

Üblicherweise arbeitet die Fördereinrichtung derart, daß der Druck im Druckkessel mit Hilfe eines Sensors gemessen wird. Unterschreitet der Druck einen ersten Wert, wird die Pumpe in Gang gesetzt, bis der Druck einen zweiten Wert überschreitet. Dann wird die Pumpe wieder ausgeschaltet.

Es können nun sowohl Probleme bei der Dichtigkeit der das Gaspolster von dem Wasser in den Druckkessel trennenden Membran als auch direkte Probleme bei der Pumpe auftreten. Im einfachsten Fall kann die Steuereinrichtung die Zeit messen, die die Pumpe arbeiten muß, um den zwischen den beiden genannten Werten liegenden Druckunterschied zu überwinden. Ändert sich diese Zeit, so kann dies ein Indiz sowohl für ein Nachlassen der Pumpleistung als auch für eine beginnende Undichtigkeit der Membran sein.

Eine zweite, von der Erfindung vorgeschlagene Möglichkeit zur Überprüfung der Fördereinrichtung besteht darin, daß der Druck im Druckkessel vor und nach dem Ablaufen eines Rückspülvorgangs gemessen wird. Aus den Parametern der Anlage kennt man diesen Wert. Verändert er sich im Laufe der Zeit, wird ein Störsignal ausgelöst.

Ebenfalls messen kann man den Druckanstieg in Abhängigkeit von der Laufdauer der Pumpe.

Es wurde bereits erwähnt, daß eine plötzliche mechanische Verunreinigung des Brauchwassers von einer Trübungsmessung festgestellt werden kann. Die Erfindung schlägt in Weiterbildung nun vor, daß in der Grauwasserleitung, die zu dem Wasserspeicher führt, ein Umschaltventil angeordnet sein kann, dessen zweiter Auslaß direkt über ein Fallrohr zur Kanalisation führt. Dieses Umschaltventil kann beispielsweise direkt an jedem Waschbecken, Badewanne, Waschmaschine o. dgl. angeordnet werden, deren Grauwasser in den Wassertank gelangen soll. Es ist jedoch ebenfall möglich und wird von der Erfindung vorgeschlagen, ein einziges Umschaltventil in der Grauwasserleitung direkt vor dem Grauwassereinlaß in den Wasserspeicher anzuordnen.

Das Umschaltventil kann mit Vorteil fernsteuerbar sein, also zum Beispiel als Magnetventil ausgebildet sein. In diesem Fall läßt es sich sowohl von der Steuereinrichtung als Reaktion auf einen bestimmten Störungsfall oder auch vom Benutzer über eine Taste direkt umschalten. Will z. B. eine Person ein Moorbad in einer Badewanne nehmen, so ist es sinnvoll, wenn er anschließend beim Öffnen des Badewannenauslasses das Ventil betätigt, so daß die mechanischen Teilchen im Wasser gar nicht erst über das Filter zum Wassertank gelangen, sondern gleich in die Kanalisation gelangen. Ein gleicher Fall kann auftreten, wenn ein Waschbeckensiphon mit Reinigungsmitteln gereinigt wird. Auch in diesem Fall kann man das Grauwasser direkt zur Kanalisation ableiten.

Bei Waschmaschinen könnte man eine Einrichtung vorsehen, die beim ersten Spülen das Spülwasser zur Kanalisation leitet und erst beim zweiten Spülen das Wasser in den Wassertank gelangen läßt.

Um auch hier die Benutzung einfacher zu gestalten, schlägt die Erfindung in Weiterbildung vor, daß in der Grauwasserleitung vor dem Umschaltventil eine Meßeinrichtung für die Wasserqualität angeordnet werden kann. In diesem Fall können die erwähnten Fälle auch von der Steuerung automatisch erkannt und die entsprechenden Maßnahmen eingeleitet werden.

Eine Möglichkeit hierfür besteht darin, daß die Meßeinrichtung auf die Trübung des Grauwassers anspricht. Dann könnten die mechanischen Verunreinigungen abgeleitet werden.

Es ist bekannt, daß sich mit Ändern der Wasserqualität auch die Leitfähigkeit des Wassers stark ändert. Daher kann erfindungsgemäß die Meßeinrichtung die Leitfähigkeit des Wassers messen. Auf diese Weise lassen sich auch chemische Zusätze erkennen, die nicht zu einer Trübung führen.

Das Vorhandensein einer automatisch arbeitenden mit der Steuereinrichtung verbundenen Meßeinrichtung ist insbesondere auch dann von Vorteil, wenn auch Regenwasser in den Wassertank geleitet werden soll.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: schematisch eine Anlage zur Wiederverwendung von Grauwasser;
- Fig. 2: vereinfacht eine Entkeimungsanlage mit einer UV-Lampe;
- Fig. 3: schematisch eine modifizierte Anlage zur Wiederverwendung von Grauwasser
- Fig. 4: eine schematische Darstellung einer Anlage zur Bereitstellung von Grauwasser in Form eines Wasserspeichers mit einer pumpengetriebenen Entleerungseinrichtung;
- Fig. 5: schematisch die Versorgung eines Spülkastens mit Grauwasser.

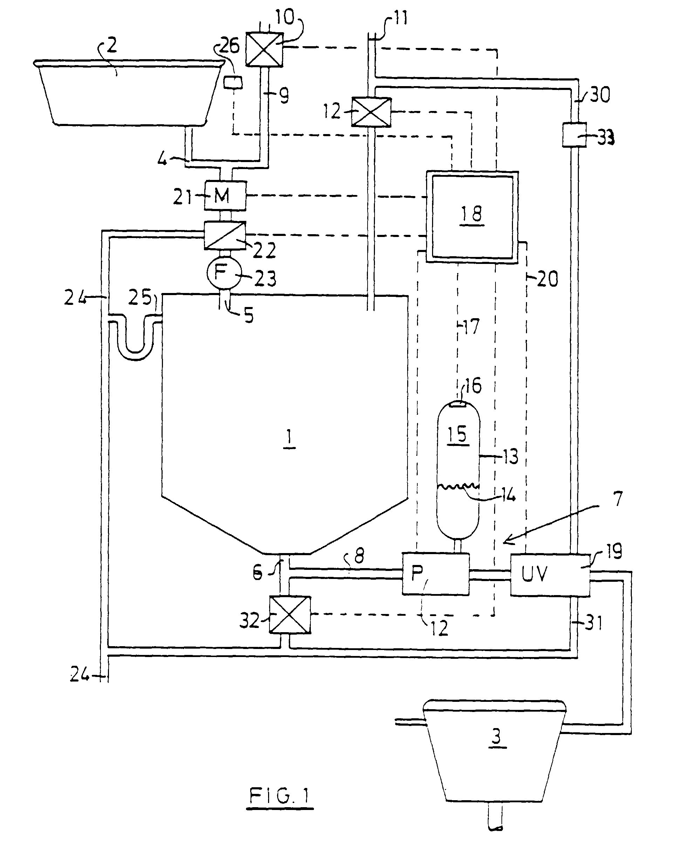

Fig. 1 zeigt in einer vereinfachten schematischen Übersicht eine Brauchwasseranlage, die als zentrales Element einen Wasserspeicher 1 aufweist. Der Wasserspeicher 1 dient zur Aufnahme und zur Speicherung von schon einmal gebrauchtem Wasser, das aus verschiedenen Einrichtungen stammen kann, beispielsweise einer Badewanne 2. Diese Badewanne ist nur als Beispiel angegeben, selbstverständlich können auch Waschbekken, Duschbecken, Geschirrspülmaschinen, Waschmaschinen o. dgl. als Quellen für Grauwasser dienen.

Das Grauwasser, das keine Trinkwasserqualität mehr hat, kann für verschiedene Zwecke immer noch verwendet werden, bei denen keine Trinkwasserqualität benötigt wird. In der Fig. 1 ist als Beispiel ein Spülkasten 3 für eine Toilettenspülung dargestellt.

Von der Badewanne 2 führt eine Grauwasserleitung 4 zu dem Grauwassereinlaß 5 in den Wasserspeicher 1. Aus dem Wasserspeicher 1 führt ein Brauchwasserauslaß 6, an den eine eine Fördereinrichtung 7 aufweisende Brauchwasserleitung 8 angeschlossen ist. Die Brauchwasserleitung 8 führt zu dem erwähnten Spülkasten 3.

Dies ist der Grundaufbau der Anlage.

Für den Fall, daß nicht ausreichend genug Grauwasser zur Verfügung steht, ist an die Grauwasserleitung 4 über eine Abzweigung eine Leitung 9 für Regenwasser angeschlossen, in der ein Magnetventil 10 angeordnet ist. Das Grauwasser kann also durch Regenwasser ergänzt werden.

Zusätzlich kann in den Wassertank über eine Trinkwasserleitung 11 auch das normale aus dem Leitungssystem stammende Wasser mit Trinkwasserqualität eingespeist werden. In der Trinkwasserleitung 11 ist wiederum ein Magnetventil 12 angeordnet.

Um das Brauchwasser zu den Entnahmestellen zu befördern, enthält die Fördereinrichtung eine elektrische Pumpe 12 und einen an diese angeschlossenen Druckspeicher 13. Der Druckspeicher 13 enthält ein durch eine Membran 14 eingeschlossenes Gasvolumen 15. Die Pumpe 12 fördert das Wasser in den Bereich vor der Membran 14 und drückt dadurch das Gasvolumen 15 zusammen. Durch den Druckspeicher wird erreicht, daß die Pumpe nicht ständig zu laufen braucht. In dem Druckspeicher 15 ist ein Drucksensor 16 angeordnet, dessen Werte über eine Steuerleitung 17 einer Steuereinrichtung 18 zur Verfügung gestellt werden.

In der Brauchwasserleitung 8 folgt auf die Pumpe 12 eine Entkeimungsanlage 19, die das Wasser mit Hilfe von UV-Strahlung entkeimt. Auch diese Entkeimungsanlage ist über eine Steuerleitung 20 mit der Steuereinrichtung 18 verbunden. In den Figuren bedeuten die gestrichelten Linien elektrische Leitungen, sowohl Steuerleitungen als auch Stromleitungen.

In die von der Badewanne 2 zum Wassertank 1 führende Grauwasserleitung 4 ist in Strömungsrichtung gesehen zunächst eine Meßeinrichtung 21 eingeschaltet, durch die das Grauwasser hindurchfließt und die bestimmte Eigenschaften des Brauchwassers mißt, beispielsweise die Trübung oder die Leitfähigkeit. Die Ergebnisse stehen der Steuereinrichtung 18 zur Verfügung.

Unmittelbar an die Meßeinrichtung 21 anschließend ist ein Abzweigventil 22 in die Grauwasserleitung 4 eingesetzt, wobei dieses Ventil 22 auch mit einem etwas größeren Abstand angeordnet sein kann. Das Umschaltventil 22 kann über eine Leitung von der Steuereinrichtung 18 ausgelöst werden. Hinter dem Umschaltventil 22 ist dann noch ein Filter 23 angeordnet, das eine Reinigung und Filterung des Grauwassers durchführt.

Das Umschaltventil 22 kann das bei ihm ankommende Grauwasser in eine Abzweigungsleitung 24 umleiten, die direkt zur Kanalisation führt. In diese Abzweigungsleitung mündet auch eine Überlaufleitung 25 des Wasserspeichers 1.

Unmittelbar in der Nähe der Badewanne 2 ist eine von Hand zu betätigende Taste 26 angeordnet, die mit der Steuereinrichtung 18 verbunden ist. Durch Drücken der Taste 26 kann der Benutzer das Umschaltventil 22 umschalten.

Die Steuereinrichtung 18 ist so ausgebildet, daß sie dann, wenn die Meßeinrichtung 21 eine Änderung der Wasserqualität feststellt, ebenfalls das Umschaltventil 22 umschaltet. Auf diese Weise kann sowohl von Hand durch Drücken der Taste 26 als auch in Abhängigkeit von dem Meßergebnis Grauwasser und/oder Regenwasser mit schlechter Wasserqualität direkt zur Kanalisation umgeleitet werden.

Die Entkeimungsanlage 19 weist nun ebenfalls eine Sicherheitseinrichtung zur Überwachung der Qualität des durch die Leitung 8 strömenden Brauchwassers auf.

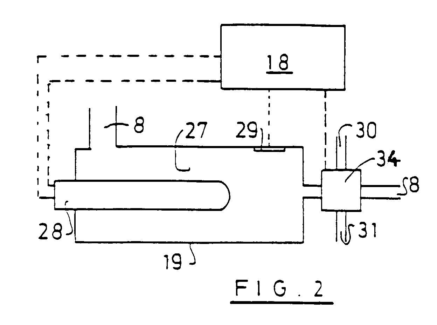

Ein Beispiel einer solchen Sicherheitseinrichtung wird in Fig. 2 beschrieben, auf die jetzt vorübergehend Bezug genommen wird. Die Entkeimungsanlage 19 weist einen Innenraum 27 auf, in den das Brauchwasser aus der Leitung 8 einströmt. Das Brauchwasser verläßt den Innenraum 27 am gegenüberliegenden Ende durch die weiterführende Leitung 8. In den Innenraum 27 der Entkeimungsanlage 19 ragt eine Strahlungsquelle in Form einer UV-Lampe 28, die das an ihr vorbeiströmende Wasser entkeimt. Die UV-Lampe erhält ihre Stromversorgung über Leitungen von der Steuereinrichtung 18.

Im Bereich des rechten von der UV-Lampe 28 abgewandten Endes ist im Innenraum 27 ein fotoempfindliches Element 29 angeordnet, das auf die UV-Strahlung der Lampe 28 anspricht. Das Fotoelement 29 ist über eine Steuerleitung mit der Steuereinrichtung 18 verbunden.

Die Steuereinrichtung überprüft nun ständig sowohl den Stromverbrauch der UV-Lampe 28 als auch das Meßergebnis des fotoempfindlichen Elements 29. Geht der Stromverbrauch der UV-Lampe 28 auf null zurück, so ist die Lampe beschädigt und muß ersetzt werden. In diesem Fall gibt die Steuereinrichtung 18 nicht nur ein Warnsignal aus, sondern legt die Versorgung mit Brauchwasser still, da ohne die Entkeimung Hygieneprobleme im Brauchwasser auftreten können.

Tritt dagegen eine langsame Änderung des von dem fotoempfindlichen Element 29 gelieferten Werts ein, beispielsweise eine Verringerung der Meßspannung, so bedeutet dies, daß entweder die Lampe 28 oder auch der Fotodetektor 29 selbst sich mit Ablagerungen zusetzen oder daß eine Trübung des Wassers aufgetreten ist. Erfolgt das Auftreten dieser Änderung schnell, so spricht dies für eine mechanische Verunreinigung des Wassers, beispielsweise durch Schlamm oder Sand. In diesem Fall ist möglicherweise das Filter 23 gestört. In diesem Störungsfall ist es sinnvoll, die Anlage ebenfalls stillzulegen. Bei einer nur sehr langsam auftretenden Veränderung kann es ausreichen, zunächst nur eine Warnung abzugeben, damit die Anlage gewartet und gereinigt wird.

Wie nochmals Fig. 1 zeigt, ist die Entkeimungsanlage 19 über eine eine Sicherungseinrichtung 33 gegen Rücksaugen aufweisende Abzweigleitung 30 auch mit der Trinkwasser führenden Leitung 11 verbunden. Gleichzeitig hat die Entkeimungsanlage 19 eine weitere Leitung 31, die mit der Abzweigleitung 24 verbunden ist, die zur Kanalisation führt. In die Leitung 31 mündet ebenfalls eine Abzweigung des Brauchwasserauslasses 6, in die ein Magnetventil 32 eingeschaltet ist.

Die Anordnung dieser Leitungen ist in Fig. 2 ebenfalls dargestellt, wo zu sehen ist, daß die Leitungen 30 und 31 an einem Vierwegeventil 34 angeschlossen sind. Im Normalfall strömt das Brauchwasser aus dem Innenraum 27 der Entkeimungsanlage durch das Vierwegventil 34 ungestört hindurch zu der Leitung 8. Bei Betätigung des Vierwegeventils 34 fließt das Wasser dann aus dem Innenraum 27 zur Leitung 31, während die Leitung 8 mit der Leitung 30 verbunden ist, die Leitungswasser führt.

Die Steuereinrichtung 18 ist nun folgendermaßen ausgebildet. Fällt die UV-Lampe vollständig aus, so schaltet die Steuereinrichtung 18 das Vierwegeventil 33 um, so daß an den Spülkasten 3 jetzt Leitungswasser geliefert wird. Gleichzeitig kann sie aus Sicherheitsgründen die Fördereinrichtung 7 stillegen.

Kommt die Steuereinrichtung zu der Ansicht, daß die Störung durch eine Schlechtfunktion des Filters 23 verursacht ist, so kann sie zusätzlich oder anstelle der gerade erwähnten Möglichkeit den Speicher 1 entleeren, indem sie das Magnetventil 32 öffnet, und den Wasserspeicher mit Trinkwasser durch Öffnen des Magnetventils 12 befüllt. Gleichzeitig kann sie eine Rückspülung des Filters 23 über eine nicht dargestellte Rückspüleinrichtung auslösen. Um das weitere Nachfließen von mechanisch verunreinigtem Wasser in den Wasserspeicher 1 zu verhindern, kann sie das Umschaltventil 22 betätigen. Sobald der Wasserspeicher 1 mit Leitungswasser gefüllt ist, kann sie dann das Vierwegeventil zurückschalten.

Während bei der schematisch in Fig. 2 dargestellten Lösung das Vierwegeventil 34 unmittelbar im Anschluß an die Entkeimungsanlage 19 angeordnet ist, ist es selbstverständlich auch möglich, ein solches Umschaltventil 34 unmittelbar neben dem Spülkasten 3 anzuordnen, wobei dann die Trinkwasser führende Leitung 30 auch direkt bis zum Spülkasten 3 geführt werden müßte.

Selbstverständlich kann die Steuereinrichtung Möglichkeiten enthalten, manuell trotz eines Störungsfalls die Vorrichtung in der normalen Weise weiterzubetreiben, zu Testzwecken oder für Notfälle.

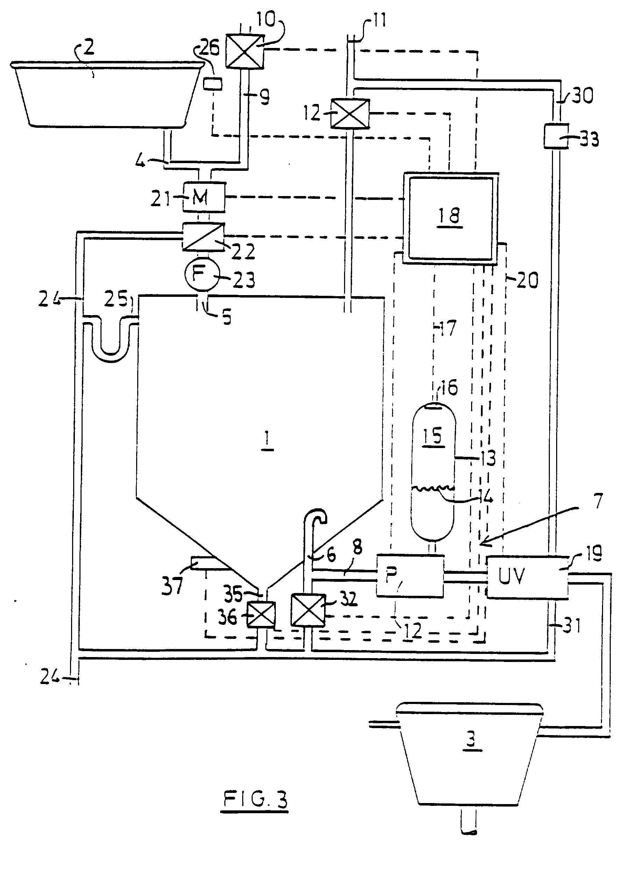

Die in Fig. 3 dargestellte Ausführungsform ist gegenüber derjeningen von Fig. 1 dadurch modifiziert, daß am unteren Ende (Bodenbereich) des Speichers 1 ein Auslaß 35 als Abzug für dort angesammelte Feststoffe, insbesondere Schlamm vorgesehen ist. Da die übrigen Teile der Vorrichtung im wesentlichen denjenigen gemäß Fig. 1 entsprechen, wurden die verwendeten Bezugszeichen weitgehend beibehalten. Der Schlammabzug durch den Auslaß 35 wird durch ein zusätzliches Ventil 36 bewirkt, das wie die übrigen Ventile mit der Steuereinrichtung 18 in Verbindung steht. Weiter kann zusätzlich ein Detektor für die abgesetzten Feststoffe (Schlammdetektor) 37 vorgesehen sein, der, wie in Fig. 3 dargestellt, in einer bestimmten Höhe im Bodenbereich des Speichers 1 angeordnet sein kann. Auch dieser Detektor 37 steht mit der Steuereinrichtung 18 in Verbindung. Dementsprechend kann der Schlammdetektor 37 eine Meldung an die Steuereinrichtung 18 abgeben, wenn der Schlamm innerhalb des Speichers 1 eine bestimmte Höhe oder Dicke erreicht hat. Die Überwachungsschaltung der Steuereinrichtung öffnet dann das Ventil 36 und der abgesetzte Schlamm wird durch den Auslaß 35 abgezogen. Dabei kann vorgesehen sein, daß das Ventil 36 für eine bestimmte Zeit geöffnet bleibt, die üblicherweise ausreicht, den gesamten Schlamm, der sich angesammelt hat, abzuleiten. Es ist auch möglich, das Ventil 36 für eine bestimmte Durchflußmenge zu öffnen oder das Ventil 36 dann zu schließen, wenn der Detektor 37 oder ggf. weitere Detektoren anzeigen, daß kein Schlamm mehr vorhanden ist. Ist überhaupt kein Schlammdetektor 37 vorhanden, kann das Ventil 36 beispielsweise in regelmäßigen Abständen geöffnet werden, um vorhandenen Schlamm abzuziehen.

Auch bei der Ausführungsform gemäß Fig. 3 erfolgt die Ableitung des Brauchwassers über den Auslaß 6, der sich jedoch in Abweichung von Fig. 1 nicht mehr am tiefsten Punkt des Speichers 1 befindet, sondern nach oben in das Innere des Behälters hineingezogen ist. Dadurch wird verhindert, daß Schlamm, der sich am Boden des Speichers 1 abgesetzt hat, durch den Auslaß 6 austreten kann. Zusätzlich kann das ins Innere des Speichers 1 ragende Ende des Brauchwasserauslaßes 6 derart ausgestaltet sein, daß ein unbeabsichtigter Eintritt von Schlamm in den Auslaß verhindert wird, wie dies in Fig. 3 dargestellt ist.

Selbstverständlich kann ein entsprechender Schlammabzug bei sämtlichen Ausführungsformen der in dieser Anmeldung beschriebenen Erfindung vorgesehen sein.

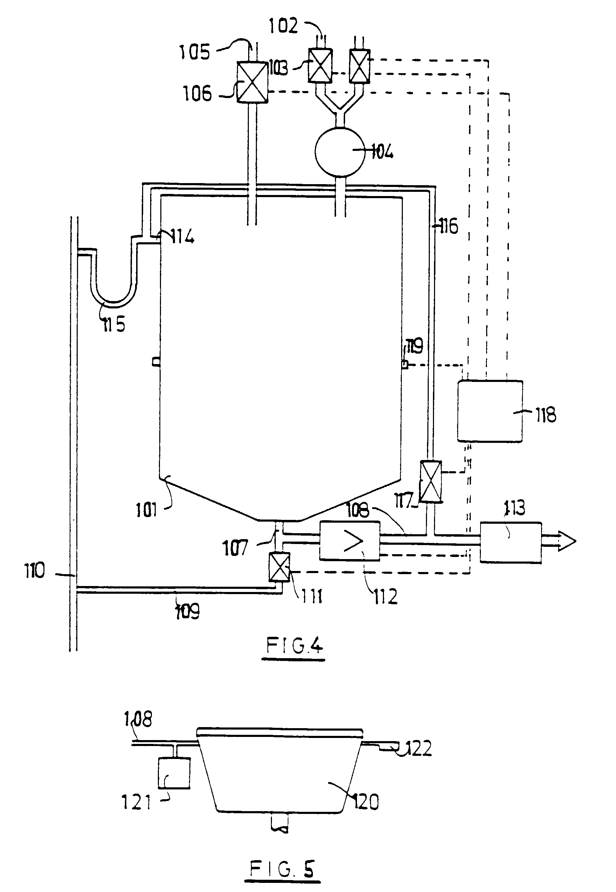

Die in Fig. 4 schematisch dargestellte Anlage zur Bereitstellung von Grauwasser enthält als zentrales Element einen Wasserspeicher 101, der ein je nach Größe der Installation berechnetes Fassungsvermögen hat. In den Wasserspeicher 101 gelangt Grauwasser über eine erste Leitung 102, die, beispielsweise über ein Pumpensystem, mit den Wasserauslässen aus Waschbecken, Badewannen o. dgl. verbunden ist, gegebenenfalls auch mit einer Regenwassersammelanlage. In die Leitung 102 kann ein Magnetventil 103 eingeschaltet sein, das mit Hilfe elektrischen Stroms geöffnet und geschlossen werden kann. Die Leitung 102 für Grauwasser führt dann über ein T-Stück in ein Filter 104.

Der andere Zweig des T-Stücks ist mit einer Leitung für Regenwasser verbunden, wobei auch diese Leitung ein Magnetventil aufweisen kann. Aus dem Filter führt die Leitung dann in das Innere des Wasserspeichers 101, wobei aus Gründen der Geräuschentwicklung die in das Innere führende Leitung auch bis zum Boden durchgeführt werden kann.

In den Wasserspeicher 101 führt eine Leitung 105 für Trinkwasser, also Leitungswasser, in die ebenfalls ein Magnetventil 106 eingeschaltet ist. Auch diese Leitung kann bis in den Bereich des Bodens des Speichers geführt sein. Die Leitung dient dazu, bei Bedarf Leitungswasser einzufüllen.

Aus dem Wasserspeicher 101 führt an dessen tiefster Stelle ein Wasserauslaß 107, der über ein T-Stück einerseits mit einer weiterführenden Leitung 108 und andererseits mit einer Entleerungsleitung 109 verbunden ist. In der Entleerungsleitung 109, die zu einem Fallrohr 110 führt, ist ebenfalls ein Magnetventil 111 eingesetzt. Die Entnahmeleitung 108 führt zu einer elektrisch betriebenen Pumpe 112, von der aus das Wasser über die Entnahmeleitung 108 zu den in Fig. 4 nicht dargestellten Entnahmestellen für das Grauwasser führt. In diese Leitung 108 kann stromab der Pumpe 112 auch eine Einrichtung 113 zur Zugabe von Desinfektionsmitteln o. dgl. oder eine UV-Entkeimungsanlage eingeschaltet sein.

Der Wasserspeicher 101 enthält in seinem oberen Bereich einen Überlauf 114, der über einen sich daran anschließenden einen Geruchsverschluß bildenen Siphon 115 zu dem Fallrohr 110 führt.

Von der Entnahmeleitung 108 für das Grauwasser führt eine zweite Entleerungsleitung 116 zu dem Überlauf 114 vor dessen Siphon 115. Auch in dieser Entleerungsleitung 116 ist ein Magnetventil 117 eingeschaltet.

Die Anlage enthält eine zentrale Steuerung 118, mit der die verschiedenen Magnetventile, die Pumpe 112 und ein Niveaufühler 119 verbunden sind. Der Niveaufühler 119 ist schematisch dargestellt, es kann sich hierbei beispielsweise um einen Schwimmer oder eine andere Einrichtung handeln, die dann anspricht, wenn der Behälter 101 bis zu einer bestimmten Höhe mit Wasser befüllt ist.

Im Normalbetrieb läuft das Grauwasser über die Leitung 102 und das geöffnete Magnetventil 103 und das Filter 104 in den Behälter 101 ein. Das Grauwasser wird je nach Anfall in den Speicher 101 eingefüllt. Wenn die Füllhöhe den Überlauf 114 erreicht, fließt das Grauwasser über den Geruchsverschluß 115 in das Fallrohr 110.

Die Pumpe 112 kann beispielsweise immer dann eingeschaltet werden, wenn in der Entnahmeleitung 108 ein Druckabfall auftritt. Sie fördert das aus dem Wasserspeicher 101 entnommene Grauwasser zu den Verbrauchern, beispielsweise einem in Fig. 5 angedeuteten Spülkasten 120 einer Toilettenspülung.

Bei jeder Wasserabnahme aus der Entnahmeleitung 108 wird in der Steuereinheit 118 ein Zeitschaltglied auf Null zurückgesetzt, das anschließend wieder zu laufen beginnt. Sobald das Zeitschaltglied eine Zeitdauer von beispielsweise zwei Tagen ununterbrochen erreicht hat, löst es einen Entleerungsvorgang für den Wasserspeicher 101 aus. Dieser kann beispielsweise folgendermaßen ablaufen. Zunächst wird bei nicht arbeitender Pumpe 112 das Magnetventil 111 geöffnet, so daß der Inhalt des Wasserspeichers 101 über die Entleerungsleitung 109 in das Fallrohr 110 läuft. Da der Inhalt des Wasserspeichers 101 und die Leitungsquerschnitte der Leitungen bekannt sind, läßt sich die Zeit berechnen, die zum vollständigen Entleeren des Speichers 101 benötigt wird. Daher kann die Öffnung des Magnetventils 111 rein zeitbestimmt erfolgen.

Nach vollständiger Entleerung wird das Magnetventil 111 wieder geschlossen und das Magnetventil 106 für das Leitungswasser geöffnet. Dadurch fließt Leitungswasser, d. h. Trinkwasser, in den Behälter 101 ein. Aufgrund der geometrischen Daten der Leitung 105 und dem Wasserdruck kann auch das Befüllen zeitgesteuert erfolgen. Es wird jedoch bevorzugt, mit Hilfe des Niveaufühlers 119 eine Befüllung bis zu dieser Höhe durchzuführen. Sobald der Speicher 101 bis zu der Linie des Niveaufühlers 119 mit Leitungswasser befüllt ist, wird das Magnetventil 106 geschlossen. Der Wasserspeicher 101 ist jetzt mit einer ausreichenden Menge Trinkwasser befüllt, so daß keine weitere Beeinträchtigung des Wassers durch Geruch oder Bakterien zu besorgen ist.

Die Steuerung kann aber auch aufwendiger gestaltet werden, was im folgenden beschrieben wird.

Nach der bereits beschriebenen Entleerung kann sich nun noch eine zweite verkürzte Entleerung folgendermaßen anschließen.

Das Magnetventil 117 wird von der Steuerung 118 geöffnet und die Pumpe 112 in Gang gesetzt. Sie pumpt nun das im Wasserspeicher 101 stehende Trinkwasser über die Entleerungsleitung 116 zu dem Überlauf 114 und durch den Siphon 115 in das Fallrohr. Damit wird jetzt auch das noch in dem Siphon 115 stehende Grauwasser durch Trinkwasser ersetzt.

Die Anlage kann auch eine dritte Art der Entleerung durchführen. Bei dieser dritten Art der Entleerung erfolgt bereits der erste Entleerungsvorgang nicht über die Leitung 109, sondern in der beschriebenen Weise über die Entleerungsleitung 116. Es wird also zunächst der Inhalt des Wasserspeichers 101 mit Hilfe der Pumpe 112 über die Entleerungsleitung 116 und den Siphon 115 in das Fallrohr 110 entleert. Anschließend gibt die Steuereinheit 118 ein Signal an eine Empfangseinheit 121 am Spülkasten 120, die einen normalen Spülvorgang des Spülkastens 120 auslöst. Zu diesem Zweck kann die Empfangseinheit 121 beispielsweise einen Hubantrieb, einen Elektromotor oder auch einen Hydraulikzylinder auslösen, der den normalen Betätigungsgriff 122 des Spülkastens 120 bewegt.

Als Signal kann beispielsweise ein Ultraschallsignal verwendet werden, das direkt in die Entnahmeleitung 108 eingespeist wird, so daß die Empfängereinheit 121 über die Leitung 108 ausgelöst wird.

Soll der Spülvorgang durch einen Hydraulikzylinder ausgelöst werden, so kann erfindungsgemäß der Hydraulikzylinder mit unter Druck stehender Hydraulikflüssigkeit über eine Hydraulikleitung versorgt werden, die von der Steuereinheit ausgehen kann.

Nach der sich an die erste Entleerung über die Entleerungsleitung 116 anschließenden Wiederbefüllung des Wasserspeichers 101 kann dann bei der zweiten kurzzeitigen Entleerung auch eine zweite Auslösung des Spülkastens 120 erfolgen, so daß auch der Siphon der Toilette mit Leitungswasser gefüllt wird.

Möglich sind auch Kombinationen der verschiedenen Vorgänge. So könnte beispielsweise die erste Entleerung sowohl über die Leitung 109 als auch über die Leitung 116 erfolgen oder zunächst über die Leitung 109 und im letzten Bereich über die Leitung 116.

Wenn, wie bei der dargestellten Ausführungsform beschrieben, die Befüllung des Wasserspeichers 101 nach der automatischen Entleerung nur mit Trinkwasser erfolgt, so kann nach der zweiten Entleerung die Anlage sich ausschalten. Bei vollständiger Befüllung aller Teile der Anlage mit Trinkwasser ist eine Beeinträchtigung durch Geruch o. dgl. nicht mehr zu befürchten.

Erfolgt jedoch eine Befüllung des Wasserspeichers 101 mit Regenwasser, so kann es vorgesehen sein, daß die automatische Entleerung in größeren Abständen wiederholt wird.

## Patentansprüche

1. Vorrichtung zur Nutzung von Grauwasser, mit mindestens einem Wasserspeicher (1; 101), einer in den Speicher (1; 101) führenden Grauwasserzuführung (4, 9; 102), einer in den Speicher (1; 101) führenden Leitungswasserzuführung (11; 105), einem aus dem Speicher (1; 101) herausführenden Brauchwasserauslaß (6; 107), sowie mit einer Steuereinrichtung (18; 118), die zur Überwachung des Betriebszustands der Vorrichtung, insbesondere von Betriebszeiten, Betriebsparametern und/oder Grauwassereigenschaften und zur Auslösung und/oder Durchführung bestimmter Funktionen der Vorrichtung in Abhängigkeit vom Überwachungsergebnis Meßeinrichtungen für den Betriebszustand und Stelleinrichtungen für die den Betriebszustand beeinflussenden Einrichtungen aufweist, sowie mit einer Entleerungseinrichtung, dadurch gekennzeichnet, daß die Steuereinrichtung (18; 118) ein Zeitschaltglied enthält, das die Entleerungseinrichtung auslöst und bei jeder Wasserentnahme aus dem Speicher (101) zurückgestellt wird.

2. Vorrichtung nach Anspruch 1, bei der die Entleerungseinrichtung derart ausgebildet ist, daß sie den Speicher (101) vollständig entleert und nach dem Entleeren mindestens teilweise mit Leitungswasser befüllt, und zeitgesteuert nach Ablauf einer bestimmten Zeit nach der letztmaligen Entnahme von Brauchwasser den Entleerungsvorgang auslöst.

3. Vorrichtung nach Anspruch 2, bei der die Entleerungseinrichtung derart ausgebildet ist, daß sie den Wasserspeicher (101) nur zum Teil mit Leitungswasser befüllt.

4. Vorrichtung nach einem der Ansprüche 1 bis 3, bei der der Wasserspeicher (101) einen Überlauf (114) mit einem Geruchsverschluß (115) aufweist.

5. Vorrichtung nach einem der Ansprüche 2 bis 4, bei der die Entleerungseinrichtung derart ausgebildet ist, daß sie anschließend an die Wiederbefüllung mit Leitungswasser eine erneute gegebenenfalls nicht vollständige Entleerung durchführt.

6. Vorrichtung nach einem der Ansprüche 2 bis 5, bei der die Entleerungseinrichtung eine Pumpe (112) aufweist.

7. Vorrichtung nach einem der Ansprüche 2 bis 6, mit einer vom Wasserauslaß (107) aus dem Speicher (101) zu einem Fallrohr (110) führenden ein Ventil (111) aufweisenden Entleerungsleitung (109).

8. Vorrichtung nach einem der Ansprüche 5 bis 7, mit einer Entleerungsleitung (116), die zu dem Überlauf (114) des Speichers (101) führt.

9. Vorrichtung nach einem der Ansprüche 2 bis 8, bei der die Zuleitung (102) für Grauwasser und/oder für Regenwasser ein Magnetventil (103) aufweist.

10. Vorrichtung nach einem der Ansprüche 1 bis 9, bei der die Zuleitung (105) für Leitungswasser ein Magnetventil (106) aufweist.

11. Vorrichtung nach einem der Ansprüche 1 bis 10, bei der die Zuleitung (102) für Grauwasser ein Filter (104) aufweist.

12. Vorrichtung nach einem der Ansprüche 2 bis 11, bei der die Entleerungseinrichtung derart ausgebildet ist, daß sie einen Entleerungsvorgang eines nachgeschalteten Spülkastens (120) auslöst.

13. Vorrichtung nach Anspruch 12, bei der die Entleerungseinrichtung derart ausgebildet ist, daß sie einen zweiten Entleerungsvorgang eines nachgeschalteten Spülkastens (120) auslöst.

14. Vorrichtung nach einem der Ansprüche 12 oder 13, bei der der Spülkasten (120) eine von der Entleerungseinrichtung gegebenenfalls ferngesteuert ausgelöste Betätigungseinrichtung aufweist.

15. Vorrichtung nach einem der vorhergehenden Ansprüche, mit einer Fördereinrichtung (7) zur Förderung des Brauchwassers durch die Brauchwasserleitung (8) zu der Entnahmestelle (3), sowie mit einer Steuereinrichtung (18), die bei schlechter und/oder fehlender Funktion eines der Teile der Vorrichtung eine Warnung abgibt und/oder die Vorrichtung stillegt und/oder die betroffene Funktion umgeht.

16. Vorrichtung nach einem der vorhergehenden Ansprüche, mit einer UV-Entkeimungsanlage (19) für das Brauchwasser, deren Funktion von einer Steuereinrichtung (18) überprüft wird.

17. Vorrichtung nach Anspruch 16, bei der die Steuereinrichtung (18) den Stromverbrauch der Strahlungsquelle (28) der Entkeimungsanlage (19) überprüft.

18. Vorrichtung nach einem der Ansprüche 16 oder 17, bei der die Steuereinrichtung (18) die Trübung des Brauchwassers überprüft.

19. Vorrichtung nach einem der Ansprüche 15 bis 18, bei der im Störungsfall der Wasserspeicher (1) zur Kanalisation entleert und mit Leitungswasser und/oder Regenwasser befüllt wird.

20. Vorrichtung nach einem der Ansprüche 15 bis 19, bei der im Störungsfall die Brauchwasserleitung (8) entleert und mit Leitungswasser und/oder Regenwasser versorgt wird.

21. Vorrichtung nach einem der Ansprüche 15 bis 20, bei der im Störungsfall unmittelbar an der Entnahmestelle (3) Leitungswasser eingespeist wird.

22. Vorrichtung nach einem der Ansprüche 15 bis 21, bei der die Fördereinrichtung eine Pumpe (12) und einen Druckkessel (13) als Speicher aufweist und die Steuereinrichtung (18) den Druck in dem Druckkessel (13) überwacht, insbesondere den Druckverlauf.

23. Vorrichtung nach Anspruch 22, bei der zur Überwachung der Fördereinrichtung (7) der Druckanstieg im Druckkessel (13) in Abhängigkeit von der Laufdauer der Pumpe (12) gemessen wird.

24. Vorrichtung nach einem der Ansprüche 22 oder 23, bei der zur Überwachung der Fördereinrichtung (7) der nach Ablauf eines Rückspülvorgangs herrschende Druck im Druckkessel (13) gemessen wird.

25. Vorrichtung nach einem der Ansprüche 15 bis 24, mit einem Umschaltventil (22) in der Grauwasserleitung, dessen zweiter Auslaß zu der Kanalisation führt.

26. Vorrichtung nach Anspruch 25, bei der ein Umschaltventil (22) an mindestens einem Grauwasser abgebenden Gerät angeordnet ist, vorzugsweise an allen.

27. Vorrichtung nach einem der Ansprüche 25 oder 26, bei der das Umschaltventil (22) in der Grauwasserleitung (4) vor dem Grauwassereinlaß (5) in den Wasserspeicher angeordnet ist.

28. Vorrichtung nach einem der Ansprüche 25 bis 27, mit einer in der Grauwasserleitung (4) vor dem Umschaltventil (22) angeordneten Meßeinrichtung für die Grauwasserqualität.

29. Vorrichtung nach Anspruch 28, bei der die Meßeinrichtung die Trübung des Grauwassers mißt.

30. Vorrichtung nach einem der Ansprüche 28 oder 29, bei der die Meßeinrichtung (21) die Leitfähigkeit des Grauwassers mißt.

31. Vorrichtung nach einem der Ansprüche 15 bis 30, mit einem für die Ableitung von Feststoffen, insbesondere Schlamm vorgesehenen Auslaß (35), der vorzugsweise am Bodenbereich des Speichers (1) angeordnet ist.

32. Vorrichtung nach Anspruch 31, bei dem dem Schlammauslaß (35) ein mit der Steuereinrichtung (18) in Verbindung stehender Detektor (37) zur Bestimmung der Feststoffmenge zugeordnet ist.

33. Verfahren zur Nutzung von Grauwasser, insbesondere mit Hilfe einer Vorrichtung nach einem der vorhergehenden Ansprüche, bei dem das Grauwasser in mindestens einen Wasserspeicher (1; 101) überführt und dort gespeichert wird, als Brauchwasser bei Bedarf aus einem Speicher (1; 101) entnommen wird, bei dem durch eine Steuereinrichtung (18, 118) der Betriebszustand der verwendeten Vorrichtung, insbesondere Betriebszeiten, Betriebsparameter und/oder Grauwassereigenschaften überwacht und in Abhängigkeit vom Überwachungsergebnis bestimmte Funktionen der Vorrichtung ausgelöst und/oder durchgeführt werden und das Grauwasser bei längerer Nichtentnahme aus dem Wasserspeicher (101) vollständig entleert und in den Wasserspeicher (101) Leitungswasser eingefüllt wird, dadurch gekennzeichnet, daß nach der vollständigen Entleerung Leitungswasser nur zum Teil eingefüllt wird.

34. Verfahren nach Anspruch 33, bei dem nach der Wiederbefüllung mit Leitungswasser dieses nochmals zum Teil entleert und dabei mögliche Geruchsverschlüsse durchgespült werden.

35. Verfahren nach einem der Ansprüche 33 oder 34, bei dem bei Entleerung gleichzeitig oder anschließend ein mit dem Grauwasser versorgter Spülkasten (120) ebenfalls entleert und wieder befüllt wird.

36. Verfahren nach Anspruch 35, bei dem der Spülkasten (120) zweimal befüllt und entleert wird.

37. Verfahren nach einem der Ansprüche 33 bis 36, bei dem bei einer Fehlfunktion eines Teils der Vorrichtung eine Warnung erfolgt oder die Abgabe von Grauwasser stillgesetzt wird.

38. Verfahren nach Anspruch 37, bei dem bei einer Störung das Brauchwasser durch Leitungswasser und/oder Regenwasser ersetzt wird.

39. Verfahren nach einem der Ansprüche 37 oder 38, bei dem das korrekte Arbeiten einer UV-Entkeimungsanlage (19) durch eine Messung des Stromverbrauchs der UV-Strahlungsquelle überprüft wird.

40. Verfahren nach einem der Ansprüche 37 bis 39, bei dem das korrekte Arbeiten der UV-Entkeimungsanlage (19) durch eine Messung der Trübung des Brauchwassers stromab der UV-Entkeimungsanlage (19) überprüft wird.

41. Verfahren nach einem der Ansprüche 37 bis 40, bei dem das Brauchwasser von einer einen Druckspeicher (13) aufweisenden Pumpe (12) durch die Brauchwasserleitung (8) gefördert und die Funktion des Druckspeichers (13) und/oder der Pumpe (12) durch Messen des Drucks, insbesondere des Druckverlaufs in Abhängigkeit von dem Arbeiten der Pumpe (12), überprüft wird.

42. Verfahren nach einem der Ansprüche 37 bis 41, bei dem die Wasserqualität des Grauwassers vor Einleiten in den Wassertank (1) geprüft und das Grauwasser gegebenenfalls unter Umgehung des Wassertanks (1) in die Kanalisation abgeleitet wird.

43. Verfahren nach Anspruch 42, bei dem die Trübung des Grauwassers gemessen wird.

44. Verfahren nach einem der Ansprüche 42 oder 43, bei dem die Leitfähigkeit des Grauwassers gemessen wird.

## Claims

1. Apparatus for using grey water, with at least one water tank (1; 101), a grey water supply pipe (4, 9; 102) leading into the tank (1; 101), a tap water supply pipe (11; 105) leading into the tank (1; 101), a process water outlet (6; 107) leading out of the tank (1; 101), as well as with a control device (18; 118) which, for monitoring the operating state of the apparatus, particularly operating times, operating parameters and/or grey water characteristics and for starting and/or performing certain functions of the apparatus as a function of the monitoring result, has measuring devices for the operating state and adjusting devices for the means influencing the operating state, as well as with an emptying device, characterized in that the control device (18; 118) contains a time switch, which starts the emptying device and is reset for each abstraction of water from the tank (101).

2. Apparatus according to claim 1, wherein the emptying device is constructed in such a way that it completely empties the tank (101) and, after emptying, at least partly fills it with tap water, and in time-controlled manner, at the end of a certain time following the final removal of process water, starts the emptying process.

3. Apparatus according to claim 2, wherein the emptying device is constructed in such a way that it only partly fills the water tank (101) with tap water.

4. Apparatus according to one of the claims 1 to 3, wherein the water tank (101) has an overflow (114) with an odour seal (115).

5. Apparatus according to one of the claims 2 to 4, wherein the emptying device is constructed in such a way that, following onto a refilling with tap water, it performs a further optionally not complete emptying.

6. Apparatus according to one of the claims 2 to 5, wherein the emptying device has a pump (112).

7. Apparatus according to one of the claims 2 to 6, having an emptying pipe (109), provided with a valve (111), leading from the water outlet (107) from the tank (101) to a waste pipe (110).

8. Apparatus according to one of the claims 5 to 7, having an emptying pipe (116) leading to the overflow (114) of the tank (101).

9. Apparatus according to one of the claims 2 to 8, wherein the supply pipe (102) for grey water and/or rain water has a solenoid valve (103).

10. Apparatus according to one of the claims 1 to 9, wherein the tap water supply pipe (105) has a solenoid valve (106).

11. Apparatus according to one of the claims 1 to 10, wherein the grey water supply pipe (102) has a filter (104).

12. Apparatus according to one of the claims 2 to 11, wherein the emptying device is constructed in such a way that it starts an emptying process of a downstream toilet flush tank (120).

13. Apparatus according to claim 12, wherein the emptying device is constructed in such a way that it starts a second emptying process of a downstream toilet flush tank (120).

14. Apparatus according to one of the claims 12 or 13, wherein the toilet flush tank (120) has an actuating device started by the emptying device, optionally in remotely controlled manner.

15. Apparatus according to one of the preceding claims, having a delivery device (7) for delivering process water through the process water pipe (8) to the abstraction point (3), as well as with a control device (18), which in the case of poor and/or no function of one of the parts of the apparatus emits a warning and/or stops the apparatus and/or bypasses the function in question.

16. Apparatus according to one of the preceding claims, having a UV sterilizing unit (19) for process water, whose function is checked by a control device (18).

17. Apparatus according to claim 16, wherein the control device (18) checks the power consumption of the radiation source (28) of the sterilizing unit (19).

18. Apparatus according to one of the claims 16 or 17, wherein the control device (18) checks the cloudiness of the process water.

19. Apparatus according to one of the claims 15 to 18, wherein, in the case of a fault, the water tank (1) is emptied into the drain system and filled with tap water and/or rain water.

20. Apparatus according to one of the claims 15 to 19, wherein, in the case of a fault, the process water pipe (8) is emptied and supplied with tap water and/or rain water.

21. Apparatus according to one of the claims 15 to 20, wherein, in the case of a fault, tap water is fed in directly at the abstraction point (3).

22. Apparatus according to one of the claims 15 to 21, wherein the delivery device has a pump (12) and a pressure vessel (13) as a tank and the control device (18) monitors the pressure in the pressure vessel (13), particularly the course of the pressure.

23. Apparatus according to claim 22, wherein for monitoring the delivery device (7), the pressure rise in the pressure vessel (13) is measured as a function of the running time of the pump (12).

24. Apparatus according to one of the claims 22 or 23, wherein for monitoring the delivery device (7), the pressure in the pressure vessel (13) at the end of a flushing back process is measured.

25. Apparatus according to one of the claims 15 to 24, with a changeover valve (22) in the grey water pipe, whose second outlet leads to the drain system.

26. Apparatus according to claim 25, wherein a changeover valve (22) is located on at least one unit delivering grey water, preferably on all such units.

27. Apparatus according to one of the claims 25 or 26, wherein the changeover valve (22) is located in the grey water pipe (4) upstream of the grey water inlet (5) into the water tank.

28. Apparatus according to one of the claims 25 to 27, with a grey water quality measuring device positioned upstream of the changeover valve (22) in the grey water pipe (4).

29. Apparatus according to claim 28, wherein the measuring device measures the cloudiness of the grey water.

30. Apparatus according to one of the claims 28 or 29, wherein the measuring device (21) measures the conductivity of the grey water.

31. Apparatus according to one of the claims 15 to 30, with an outlet (35) provided for draining off solids, particularly sludge, which is preferably located on the bottom of the tank (1).

32. Apparatus according to claim 31, wherein, with the sludge outlet (35), is associated a solids quantity determining detector (37) connected to the control device (18).

33. Method for using grey water, particularly with the aid of an apparatus according to one of the preceding claims, wherein the grey water is transferred into at least one water tank (1; 101) and is stored there, as process water is abstracted when needed from a tank (1; 101) and where, by means of a control device (18, 118), the operating state of the apparatus used is monitored, particularly the operating times, operating parameters and/or grey water characteristics and as a function of the monitoring result specific functions of the apparatus are started and/or performed and, in the case of prolonged non-abstraction from the water tank (101), the grey water is completely emptied and tap water is filled into the water tank (101), characterized in that, following complete emptying, there is only a partial tap water filling.

34. Method according to claim 33, wherein following the refilling with tap water, it is again partly emptied and any possible odour seals are rinsed through.

35. Method according to one of the claims 33 or 34, wherein on emptying, simultaneously or subsequently a toilet flush tank (120) supplied with the grey water is also emptied and refilled.

36. Method according to claim 35, wherein the toilet flush tank (120) is twice filled and emptied.

37. Method according to one of the claims 33 to 36, wherein in the case of a malfunction of part of the apparatus, a warning is given or the delivery of grey water stopped.

38. Method according to claim 37, wherein in the case of a fault, the process water is replaced by tap water and/or rain water.

39. Method according to one of the claims 37 or 38, wherein the correct operation of a UV sterilizing unit (19) is monitored by measuring the power consumption of the UV radiation source.

40. Method according to one of the claims 37 to 39, wherein the correct operation of the UV sterilizing unit (19) is checked by a measurement of the process water cloudiness downstream of the UV sterilizing unit (19).

41. Method according to one of the claims 37 to 40, wherein the process water is delivered by a pump having a pressure vessel (13) through the process water pipe (8) and the function of the pressure vessel (13) and/or the pump (12) is checked by measuring the pressure, particularly the course of the pressure, as a function of the operation of the pump (12).

42. Method according to one of the claims 37 to 41, wherein the grey water quality is checked prior to introduction into the water tank and, optionally bypassing the water tank (1), the grey water is drained off into the drain system.

43. Method according to claim 42, wherein the cloudiness of the grey water is measured.

44. Method according to one of the claims 42 or 43, wherein the conductivity of the grey water is measured.

## Revendications

1. Dispositif permettant d'utiliser les eaux usées de lavage, comprenant au moins un réservoir d'eau (1 ; 101), une amenée (4, 9 ; 102) de l'eau usée de lavage conduisant dans le réservoir (1 ; 101), une conduite d'amenée (11 ; 105) de l'eau potable conduisant dans le réservoir (1 ; 101)une sortie (6 ; 107)de l'eau utilisable hors du réservoir (1 ; 101), ainsi qu'un dispositif de commande (18; 118) qui présente pour la surveillance de l'état de fonctionnement du dispositif, en particulier le contrôle des temps de service, des paramètres de services et/ou des propriétés de l'eau usée de lavage, et pour le déclenchement et/ou la mise en oeuvre de certaines fonctions du dispositif en fonction du résultat du contrôle, des dispositifs de mesure pour l'état de service et des dispositifs de réglage pour les dispositifs influençant l'état de service, comprenant également un dispositif de vidage, caractérisé en ce que le dispositif de commande (18; 118) comprend un organe de commande par minuterie qui déclenche le dispositif de vidage et qui est ramené en position initiale à chaque prélèvement d'eau du réservoir (101).

2. Dispositif selon la revendication où le dispositif de vidage est conçu de manière à vider complètement le réservoir (101) et après le vidage le remplit au moins partiellement d'eau de distribution et déclenche par commande d'une minuterie la procédure de vidage après le dernier prélèvement d'eau non potable après une certaine période de temps écoulée.

3. Dispositif selon la revendication 2, où le dispositif de vidage est conçu de manière à ne remplir que partiellement d'eau de distribution le réservoir d'eau (101).

4. Dispositif selon l'une des revendications 1 à 3, où le réservoir d'eau (101) présente un trop-plein (114) avec un siphon (115).

5. Dispositif selon l'une des revendications 2 à 4, où le dispositif de vidage est conçu de manière à exécuter à la suite du remplissage d'eau de distribution un nouveau vidage éventuellement incomplet.

6. Dispositif selon l'une des revendications 2 à 5 où le dispositif de vidage présente une pompe (112).

7. Dispositif selon l'une des revendications 2 à 6 comprenant une conduite de vidage (109) présentant une vanne (111) et faisant la jonction entre la sortie (107) de l'eau provenant du réservoir (101) et un tube de descente (110).

8. Dispositif selon l'une des revendications 5 à 7, comprenant une conduite de vidage (116) qui mène au trop-plein (114) du réservoir (101).

9. Dispositif selon l'une des revendications 2 à 8, où la conduite d'amenée (102) pour l'eau usée de lavage et/ou l'eau de pluie

10. Dispositif selon l'une des revendications 2 à 8, où la conduite d'amenée (105) pour l'eau de distribution présente une électrovanne (106).

11. Dispositif selon l'une des revendications 1 à 10, où la conduite d'amenée (102) pour l'eau usée présente un filtre (104).

12. Dispositif selon l'une des revendications 2 à 11, où le dispositif de vidage est conçu de manière à déclencher une procédure de vidage d'un caisson de chasse d'eau (120) monté en aval.

13. Dispositif selon la revendication 12, où le dispositif de vidage déclenche une seconde procédure de vidage d'un caisson de chasse d'eau (120) monté en aval.

14. Dispositif selon l'une des revendications 12 ou 13, où le caisson de chasse d'eau (120) présente un dispositif d'actionnement déclenché par le dispositif de vidage le cas échéant par télécommande.

15. Dispositif selon l'une des revendications précédentes, comprenant un dispositif d'acheminement (7) de l'eau non potable par la conduite d'eau non potable (8) au point de prélèvement (3), ainsi qu'un dispositif de commande (18) qui émet un signal en cas de défaillance ou d'absence de fonctionnement de l'une des parties du dispositif et/ou immobilise le dispositif et/ou ignore la fonction concernée.

16. Dispositif selon l'une des revendications précédentes, comprenant une installation de désinfection (19) par rayons UV, pour l'eau non potable dont la fonction est supervisée par un dispositif de commande (18).

17. Dispositif selon la revendication 16, où le dispositif de commande (18) supervise la consommation de courant de la source de rayonnement (28) de l'installation de désinfection (19).

18. Dispositif selon l'une des revendications 16 ou 17, où le dispositif de commande (18) contrôle la turbidité de l'eau non potable.

19. Dispositif selon l'une des revendications 15 à 18, où en cas de panne, le réservoir d'eau (1) est vidé en direction de la canalisation et est rempli d'eau de distribution et/ou d'eau de pluie.

20. Dispositif selon l'une des revendications 15 à 19, où en cas de panne, la conduite d'eau non potable (8) est vidée et est alimentée en eau de distribution et/ou eau de pluie.

21. Dispositif selon l'une des revendications 15 à 20, où en cas de panne, une alimentation en eau de distribution s'effectue directement au point de prélèvement (3).

22. Dispositif selon l'une des revendications 15 à 21, où le dispositif d'acheminement présente une pompe (12) et un récipient d'air comprimé (13) faisant office de réservoir et le dispositif de commande (18) contrôle la pression dans le récipient d'air comprimé (13), en particulier la courbe de pression.

23. Dispositif selon la revendication 22, où pour le contrôle du dispositif d'acheminement (7), la montée de pression dans le récipient d'air comprimé (13) est mesurée en fonction de la durée de marche de la pompe (12).

24. Dispositif selon l'une des revendications 22 ou 23, où pour le contrôle du dispositif d'acheminement (7), la pression régnant après l'achèvement d'un processus de retour de chasse d'eau est mesurée dans le récipient d'air comprimé (13).

25. Dispositif selon l'une des revendications 15 à 24, comprenant une vanne de commutation (22) dans la conduite d'eau non potable dont la seconde sortie débouche dans la canalisation.

26. Dispositif selon la revendication 25, où une vanne de commutation (22) est disposée sur au moins un appareil délivrant de l'eau usée de lavage, de préférence sur tous.

27. Dispositif selon l'une des revendications 25 ou 26, où la vanne de commutation (22) est disposée dans la conduite d'eau usée de lavage (4) avant l'admission (5) de l'eau usée de lavage dans le réservoir d'eau.

28. Dispositif selon l'une des revendications 25 à 27, comprenant un dispositif de mesure disposé dans la conduite d'eau usée de lavage (4) avant la vanne de commutation (22) pour la qualité de l'eau usée de lavage.

29. Dispositif selon la revendication 28, où le dispositif de mesure mesure la turbidité de l'eau usée de lavage.

30. Dispositif selon l'une des revendications 28 ou 29, où le dispositif de mesure (21) mesure la conductibilité de l'eau usée de lavage.

31. Dispositif selon l'une des revendications 15 à 30, comprenant une sortie (35) prévue pour l'évacuation de matières solides, en particulier la boue et disposée de préférence dans la zone du fond du réservoir (1).

32. Dispositif selon la revendication 31, où la sortie d'évacuation de boue (35) est associée à un détecteur (37) connecté au dispositif de commande (18) pour déterminer la quantité de matières solides.

33. Procédé permettant d'utilisé l'eau usée de lavage, en particulier à l'aide d'un dispositif selon l'une des revendications précédentes, où l'eau usée de lavage est transférée dans au moins un réservoir d'eau (1 ; 101) et y est stockée pour être prélevée au besoin en tant qu'eau non potable du réservoir (1 ; 101), procédé selon lequel par l'intermédiaire d'un dispositif de commande (18, 118), l'état de service du dispositif utilisé, en particulier les temps de service, les paramètres de service et/ou les propriétés de l'eau usée de lavage sont contrôlés et certaines fonctions sont déclenchées et/ou mises en oeuvre selon le résultat du contrôle et selon lequel l'eau usée de lavage est complètement vidée du réservoir d'eau (101) et de l'eau de distribution est remplie dans le réservoir d'eau (101) en absence prolongée de prélèvement, caractérisé en ce qu'après le vidage complet l'eau de distribution n'est rempli que partiellement.

34. Procédé selon la revendication 33, selon lequel après le remplissage de l'eau de distribution, cette dernière est à nouveau partiellement vidée et est chassée à travers d'éventuels siphons.

35. Procédé selon l'une des revendications 33 ou 34, selon lequel au moment ou à la suite du vidage, un caisson de chasse d'eau (120) alimenté en eau usée de lavage est également vidé et rempli à nouveau.

36. Dispositif selon la revendication 35, où le caisson de chasse d'eau (120) est rempli et vidé deux fois.

37. Dispositif selon l'une des revendications 33 à 36, où en cas de fonctionnement défaillant d'une partie du dispositif, il se produit un signal ou la délivrance d'eau usée de lavage est suspendue.

38. Procédé selon la revendication 37, selon lequel en cas de panne, l'eau non potable est remplacée par de l'eau de distribution et/ou de l'eau de pluie.

39. Procédé selon l'une des revendications 37 ou 38, selon lequel le travail correct d'une installation de désinfection par (19) rayon UV est contrôlé par une mesure de la consommation de courant de la source de rayonnement UV.

40. Procédé selon l'une des revendications 37 à 39, selon lequel le travail correct d'une installation (19) de désinfection par rayon UV est contrôlé par une mesure de la turbidité de l'eau non potable en aval de l'installation de désinfection par rayons UV.

41. Procédé selon l'une des revendications 37 à 40, selon lequel l'eau non potable est acheminée par une pompe (12) présente le récipient d'air comprimé (13) à travers la conduite d'eau non potable (8) et la fonction du récipient d'air comprimé (13) et/ou de la pompe (12) est contrôlée par mesure de la pression, en particulier de la courbe de pression en fonction du travail de la pompe (12).

42. Procédé selon l'une des revendications 37 à 41, selon lequel la qualité de l'eau usée de lavage est contrôlée avant l'introduction dans le réservoir d'eau (1) et l'eau usée de lavage est éventuellement dérivée dans la canalisation en évitant le réservoir d'eau (1).

43. Procédé selon la revendication 42, selon lequel la turbidité de l'eau usée de lavage est mesurée.

44. Procédé selon l'une des revendications 42 ou 43, selon lequel la conductibilité de l'eau usée de lavage est mesurée.
